# EUROPEAN PATENT APPLICATION

(11) **EP 3 244 669 A1**
(43) Date of publication of application: **15.11.2017**
(21) Application number: 16305546.0
(22) Date of filing: 11.05.2016
(51) Int. Cl.: H04W 68/00

(54) **METHOD, SYSTEM AND COMPUTER READABLE MEDIUM TO SEND AT LEAST ONE NOTIFICATION TO AT LEAST ONE SELECTED USER EQUIPMENT**

(71) Applicant: ALCATEL LUCENT, 92100 Boulogne-Billancourt (FR)
(72) Inventor: ACER, Utku Gunay, 2018 ANTWERP (BE); MASHHADI, Afra, DUBLIN, 15 (IE); VANDERHULST, Geert, 2018 ANTWERP (BE); FORLIVESI, Claudio, 2018 ANTWERP (BE)
(74) Representative: Berthier, Karine

(57) **Abstract**

Method to send at least one notification to at least one selected user equipment by an access point, system and computer readable medium. The method comprises a step of obtaining the notification from a notification server and a step 102 of sending the notification via at least one action frame, the directed action frame containing the notification.

## Description

### FIELD OF INVENTION

The present subject matter relates to the broadcasting of notifications to user equipments, more precisely to location based mobile notifications.

### BACKGROUND

Mobile notifications are small messages sent to a user's mobile device to make her aware of unattended online content or to advertise relevant local content. This concept is one of the most important factors that shape users' experience with their devices and surroundings. With the increasing abundance of wearable devices, the role of notifications will only increase.

Present location-based notification schemes used in mobile apps depend on
1) an active network connection and
2) the user's location.
In order to satisfy the first requirement, the user needs an active cellular connection or be able to connect to the WiFi network at her present location. However, maintaining such continuous network connection might not be feasible due to costs (e.g., when roaming), inability to connect (e.g., when a WiFi password is not known) or energy consumption (i.e., wearables with limited battery lifetime).
To satisfy the second requirement, the user's device should determine its own location (e.g., via GPS or Google/Apple geo-location services) and share it with a remote notification service. The second requirement also depends on an active network connection and draws additional energy from a mobile device.

In state-of-the art solutions, application servers in the cloud directly communicate with user devices over a network connection to obtain location coordinates and relay notification messages. The servers evaluate the location of the user and provide a set of "suggestions" to the user. Clearly, this solution suffers from the two requirements presented in the previous section.

It is also known a mechanism so called Beacon Stuffing. This mechanism is described in the article of Chandra, R.; Padhye, J.; Ravindranath, L.; Wolman, A., "Beacon-Stuffing: Wi-Fi without Associations," published in Mobile Comparting Systems and Applications, 2007. HotMobile 2007. Eighth IEEE Workshop on, vol., no., pp.53,57, 8-9 March 2007. This mechanism proposes to modify the periodic beacon messages from local Access Points (APs) to relay notifications (e.g., information such as advertisements, coupons, etc) to user devices. These beacon messages are part of the WiFi standard and used to associate a device with a wireless network. Devices can listen to beacons prior to association, (and even when they are associated with a different AP), so they can derive embedded information even without actually joining their corresponding network. However, this essentially means abusing the standard. In addition, beacon messages are broadcast in nature and cannot be directed to a particular user device.

The aim of the present subject matter is to propose a method and system to broadcast notifications to user equipments that doesn't present the drawbacks presented in the previous sections.

### SUMMARY

This summary is provided to introduce concepts related to the broadcasting of notifications to user equipments.

In one implementation, a method to send at least one notification to at least one selected user equipment by an access point is described. The method comprises a step of obtaining the notification from a notification server and a step 102 of sending the notification via at least one action frame, the directed action frame containing the notification.

In another implementation, a system to send at least one notification to at least one selected user equipment is described. The system comprises a message controller an identifier and a message generator and an access point wherein the message controller and the user equipment comprises at least one wireless interface and the message controller is configured to detect the presence of the user equipment and to identify an user associated to the user equipment and the identifier is configured to extract the profile of the user and the message generator is configured to retrieve the notification associated to the user and the message controller is also configured to integrate the notification within at least one action frame and the access point is configured to send the at least one action frame to the user equipment.

In another implementation a computer-readable medium is described. This computer-readable medium has embedded thereon a method to send at least one notification to at least one selected user equipment by an access point. The method comprises a step of obtaining the notification from a notification server and a step of sending the notification via at least one action frame, the action frame containing the notification.

### BRIEF DESCRIPTION OF THE FIGURES

The detailed description is given with reference to the accompanying figures. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
Figure 1 presents a first embodiment of the method to send at least one notification to at least one user equipment.
Figure 2 presents a second embodiment of the method to send at least one notification to at least one user equipment.
Figure 3-a presents a first embodiment of the system to send at least one notification to at least one user equipment.

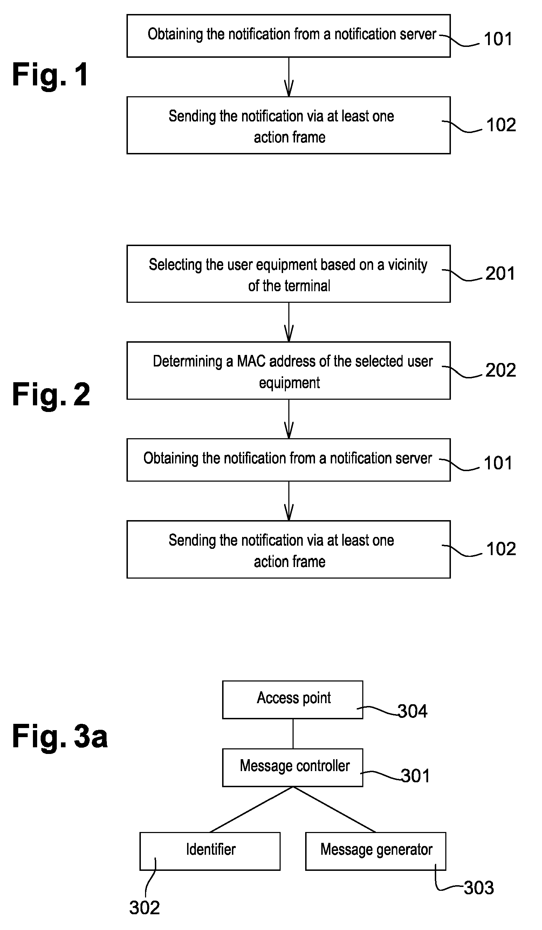

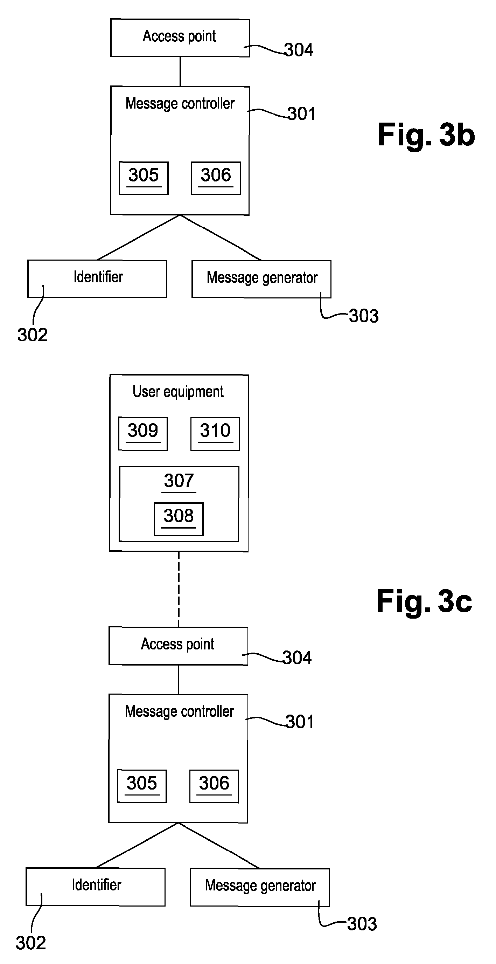

Figure 3-b presents a more detailed description of the first embodiment of the system.
Figure 3-c presents a more detailed description of the first embodiment of the system.

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

The figure 1 presents a first embodiment of the method of the present subject matter. This method to send at least one notification to at least one selected user equipment by an access point. The method comprises
- a step 101 of obtaining the notification from a notification server
- a step 102 of sending the notification via at least one action frame, the at least one action frame containing the notification.

In an embodiment the action frame is sent by the access point.

In an embodiment the at least one action frame is a directed action frame. By directed, we mean "non-broadcasted". So, if the notification is intended for a single user, it has to be to relayed with a non-broadcast action frame, or the directed action frame.

The previously described embodiment allows a mobile device to retrieve (directed) notifications from local access points without depending on an active network connection or on location determination/sharing. To this end, we leverage the IEEE 802.11 Standard without modifying it, in particular, via the use of sending notifications via action frames.

In an embodiment the at least one action frame is a broadcasted action frame. Within this embodiment the notification is intended for every user in the vicinity.

An action frame is a type of management frame used to trigger an action in the cell. Action frames are typically used for spectrum management and radio measurements. Of the various types of action frames, public action frames are used for Generic Advertisement Service (GAS). GAS makes it possible for users to retrieve information from an access point. This mechanism enables querying about venue name, network authentication type, roaming consortium, IP address type, domain name, hotspot operator and etc. With GAS, seamless roaming across WiFi networks is possible.

In the embodiments of the present subject matter, we rely on public action frames but not to query the access points. Instead, we reverse the communication flow: an access point takes the initiative to reach out with a notification message to a device. Public action frames are particularly useful for this purpose, because they do not require the sender and receiver to be in the same WiFi network or any network at all - only the WiFi interface should be switched on.

In an embodiment the method also comprises the two initial steps:
- an initial step 201 of selecting at least one user equipment located within a coverage range of the access point and
- a step 202 of determining a MAC address of the selected user equipment by monitoring probe requests originating from the selected user equipment.

MAC address is the identifier of the device. In order to send anything to a user equipment you have to know its identifier. For the IEEE 802.11 this is the MAC address. Every frame that floats in a Wi-Fi network has the information about the MAC address of the (i) sender, (ii) receiver, (iii) and the BSSID (it is a network identifier). In order to get the MAC address of the user equipment, we just have to look at the transmitting station field. In order to send something back, we need the set the receiving station field to the MAC address of the user equipment so that the notification can reach the user equipment. MAC address can also be used to find out who the user is so that the user equipment can receive personalized notifications. However, due to a number of other factors, the last point is not preferred. Instead, we can match the user equipment to a user profile through the probe request field that indicates that the user is in fact interested in the notifications.

In other words the aim of the step 201 is to select the user equipment in the vicinity of the access point. By coverage range we mean an area around the access point in which the signal, for example Wi-Fi signal, of the access point can be received by the user equipment and in which the signal, for example Wi-Fi signal, of the user equipment can be received by the access point. As the coverage range of access point using Wi-Fi signal is very limed (< 25m), if an access point receives a Wi-Fi frame from a user equipment means that this user equipment is within the vicinity of the access point. In fact there is not a real selection, if the user equipment participates in the notification reception service; it announces it in the probe request frames it sends when it scans the networks. An access point receiving this probe request will then contact the back-end service for the contents of the notification. It then sends the notification back to the user equipment.

In other words in an embodiment, a local service in e.g., a store uses its local APs to advertise promotions to the users' devices via action frames. These notifications might be broadcast to all users, or directed to individual users (e.g., based on their vicinity to a particular AP). In the latter case, an AP should be able to distinguish between users. To this end, they can monitor the probe requests originating from WiFi-enabled devices and hence learn about their MAC addresses (without the device requiring an active WiFi connection). This MAC address can then be used to direct an action frame, with embedded notification, to a specific user device. Hence, the AP might keep a counter of users to which a given notification has been sent, as to avoid duplicates (i.e., when broadcasting a promotion at regular intervals, customers that stay for a while might receive a given message multiple times).

In other words in another embodiment, we consider a remote service that aggregates notification messages for a given user. These notifications might originate from a variety of services, such as Facebook, Email, location-based services, etc. In this embodiment, APs fulfill an agent role: they relay notifications from a remote service to a user device, without the latter requiring a network connection. For instance, a user device could share its temporal, randomized MAC address (i.e., an anonymous) identity with the remote notification service. An AP, detecting a user device with the given MAC, can then fetch relevant notifications (based on its reported location, e.g., Starbucks at GPS position (longitude and latitude)), and relay them via directed action frames to the user device. For security reasons, these notification messages might be encrypted via a user's public key, known to the remote notification service.

In another embodiment the method comprises:
- an initial step of receiving a probe request from at least one user equipment and the probe request containing a profile indicator of the user equipment and
- a step of selecting the user equipment based on the profile indicator.

This profile indicator may include the places the user has visited in the past, her preferences. It is best that the profile indicator is given in the probe request field that announces the user equipment is joining the notification service. This indicator may also be encrypted for privacy concerns.

In an embodiment the user equipment allows the user to quickly opt in/out of local notifications. This could be done via two options
- option a) a software component on the device only relays notifications if e.g., some setting in the operating system is switched to "on";
- option b) a user (de)associates each of her devices' MAC addresses in a cloud-based service.

An embodiment of the present subject matter, presented figure 3-a, is a system to send at least one notification to at least one selected user equipment. The system comprises:
- a message controller 301
- an identifier 302 and
- a message generator 303 and
- an access point 304
wherein;
- the message controller 301 and the selected user equipment comprises at least one wireless interface and
- the message controller 301 is configured to detect the presence of the selected user equipment and to identify an user associated to the selected user equipment and
- the identifier 302 is configured to extract the profile of the user and
- the message generator 303 is configured to retrieve the notification associated to the user and
- the message controller 301 is also configured to integrate the notification within at least one action frame and
- the access point 304 is configured to send the action frame to the selected user equipment.

In an embodiment of the system the at least one action frame is a directed action frame.

In an embodiment of the system the at least one action frame is a broadcasted action frame.

In an embodiment of the system the access point 304 is also configured
- to select at least one user equipment located within a coverage range of the access point and
- to determine a MAC address of the selected user equipment by at least monitoring probe requests originating from the selected user equipment.

In an embodiment of the system the access point 304 is also configured to send the MAC address of the selected user equipment to the message controller 301.

In other words using the two previously described embodiments, the access point upon discovering the user equipment, communicates with the message center along with the information that identifies the user equipment (for example the MAC address). This communication basically says user equipment x is within the vicinity of access point y. Based on this information, the message center prepares one or more notifications for the user equipment x. These notifications are delivered to the access point that in turn relays them to the user equipment x within an action frame.

The figure 3-b presents a more detailed description of the system of the figure 3-a. As already described the system interacts with an user equipment also known as user device. The system comprises 3 elements, a message controller (MC) 301, an identifier (I) 302 and a message generator (MG) 303. The user equipment and the message controller 301 access the wireless medium provided by an access point 304 through their wireless interfaces and they are located close to each other. The message controller 301 may or may not be situated within an access point 304. The message controller 301 is connected to the other elements via any means. They can be located in the same network or connected through a wide area network. In some embodiments, these units may be situated in the same device. Hence, the locations of these elements in Figure 3-b is for demonstration and not meant to be a limiting factor.

The functionality of the system follows. Consider the case the user equipment comes to the proximity of the message controller 301. Once the message controller 301 detects the presence of the user equipment, an identification module 305 picks up relevant information to identify the user. This information may be a certificate that is installed on the device if it is connected to the WiFi network that the message controller 301 is connected. In other embodiments, the set of probe request messages emitted by the user equipment or the MAC address of the device can be used.

Once the information about the user equipment is picked up by the message controller 301 through its identification module 305, it will be forwarded to the identifier 302. Using the information sent by the message controller 301, the identifier 302 extracts the profile of the user associated with the user equipment. The identifier 302 may include a data base that matches the information forwarded by the message controller 301 with a user profile; however this is not meant to be limiting. This profile is then returned to the message controller 301.

The identification module 305 in the message controller 301 passes the profile information to a messaging module 306 located within the in message controller 301. This messaging module contacts the message generator 303 with the profile to retrieve the set of messages that the user might be interested given the user profile. The message generator 303 can use the profile of the user and the services, products or entities available in the area to generate the messages for the user. These short messages are then forwarded to the messaging module 306 of the message controller 301, which combines these messages in a action frame. Each of these messages can be directed to an application installed on the user equipment or merely a notification message to be presented to the user.

In an embodiment, presented figure 3-c, the user equipment also comprises a Operating System 307, this operating system comprises a Network Notifier module 308. The network notifier 308 receives the action frame that carries the messages. The network notifier 308 presents each message in the action frame to user in a notification in a way similar to regular push notification messages. If a message is destined to an application (309 or 310) installed in the user equipment, user action with the notification can trigger the initiation of the corresponding application. In other embodiments, the message can be directly forwarded to the corresponding application.

In an embodiment of the system the controller 301 and/or the identifier 302 and/or the message generator 303 comprises one or more processor(s), I/O interface(s), a memory coupled to the processor(s) and transmission means. The processor(s) may be implemented as one or more microprocessors, microcomputers, microcontrollers, digital signal processors, central processing units, state machines, logic circuitries, and/or any devices that manipulate signals based on operational instructions. The processor(s) can be a single processing unit or a number of units, all of which could also include multiple computing units. Among other capabilities, the processor(s) are configured to fetch and execute computer-readable instructions stored in the memory.

At least the functions of the identification module 305 and the messaging module 306 of the message controller 301are realized by the processor and may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

The memory may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. The memory includes computer modules and data. The computer modules include routines, programs, objects, components, data structures, etc., which perform particular tasks or implement particular abstract data types. The data, amongst other things, serves as a repository for storing data processed, received, and generated by one or more of the computer modules.

A person skilled in the art will readily recognize that steps of the methods of the present subject matter can be performed by programmed computers. Herein, some embodiments are also intended to cover program storage devices, for example, digital data storage media, which are machine or computer readable and encode machine-executable or computer-executable programs of instructions, where said instructions perform some or all of the steps of the described method. The program storage devices may be, for example, digital memories, magnetic storage media, such as a magnetic disks and magnetic tapes, hard drives, or optically readable digital data storage media. An embodiment of the present subject matter is computer-readable medium having embedded thereon the method, of the figure 1, to send at least one notification to at least one selected user equipment by an access point, the method comprising
- a step 101 of obtaining the notification from a notification server and
- a step 102 of sending the notification via at least one action frame, the action frame containing the notification.

Another embodiments of the present of the present subject matter is computer-readable medium having embedded thereon the method, of the figure 2-a or 3-a, to determine scheduling affinity hints.

## Claims

1. Method to send at least one notification to at least one selected user equipment by an access point, the method comprising
• a step (101) of obtaining the notification from a notification server
• a step (102) of sending the notification via at least one action frame, the directed action frame containing the notification.

2. Method according to the claim 1 wherein the at least one action frame is a directed action frame.

3. Method according to the claim 1 wherein the at least one action frame is a broadcasted action frame.

4. Method according to any of the previous claims also comprising
• an initial step (201) of selecting at least one user equipment located within a coverage range of the access point, and
• a step (202) of determining a MAC address of the selected user equipment by monitoring probe requests originating from the selected user equipment.

5. Method according to the claims 1 or 2 or 3 also comprising
• an initial step of receiving a probe request from at least one user equipment and the probe request containing a profile indicator of the user equipment and
• a step of selecting the user equipment based on the profile indicator;

6. System to send at least one notification to at least one selected user equipment, the system comprising
• a message controller (301) and
• an identifier (302) and
• a message generator (303) and
• an access point (304)
wherein;
• the message controller (301) and the selected user equipment comprises at least one wireless interface and
• the message controller (301) is configured to detect the presence of the selected user equipment and to identify an user associated to the selected user equipment and
• the identifier (302) is configured to extract the profile of the user and
• the message generator (303) is configured to retrieve the notification associated to the user and
• the message controller (301) is also configured to integrate the notification within at least one action frame and
• the access point (304) is configured to send the at least one action frame to the selected user equipment.

7. System according to the claim 6 wherein the at least one action frame is a directed action frame.

8. System according to the claim 6 wherein the at least one action frame is a broadcasted action frame.

9. System according to claim 6 or 7 or 8 wherein the access point (304) is also configured
• to select at least one user equipment located within a coverage range of the access point
• to determine a MAC address of the selected user equipment by at least monitoring probe requests originating from the selected user equipment.

10. System according to claim 9 wherein the access point (304) is also configured to send the MAC address of the selected user equipment to the message controller (301).

11. A computer-readable medium having embedded thereon a method to send at least one notification to at least one selected user equipment by an access point, the method comprising
• a step (101) of obtaining the notification from a notification server and
• a step (102) of sending the notification via at least one action frame, the action frame containing the notification.

12. Computer-readable medium according to the claim 11 wherein the at least one action frame is a directed action frame.

13. Computer-readable medium according to the claim 11 wherein the at least one action frame is a broadcasted action frame.

14. Computer-readable medium according to the claim 11 or 12 or 13 wherein the method also comprises:
• an initial step (201) of selecting at least one user equipment located within a coverage range of the access point, and
• a step (202) of determining a MAC address of the selected user equipment by at least monitoring probe requests originating from the selected user equipment.

## Amended claims

### Amended claims in accordance with Rule 137(2) EPC.

**1.** Method to send at least one notification to at least one selected user equipment by an access point of a Wi-Fi network, the method being not depend of an active network connection and comprising
• a step (101) of obtaining the notification from a notification server
• a step (102) of sending the notification via at least one action frame, the directed action frame containing the notification.

**2.** Method according to the claim 1 wherein the at least one action frame is a directed action frame.

**3.** Method according to the claim 1 wherein the at least one action frame is a broadcasted action frame.

**4.** Method according to any of the previous claims also comprising
• an initial step (201) of selecting at least one user equipment located within a coverage range of the access point, and
• a step (202) of determining a MAC address of the selected user equipment by monitoring probe requests originating from the selected user equipment.

**5.** Method according to the claims 1 or 2 or 3 also comprising
• an initial step of receiving a probe request from at least one user equipment and the probe request containing a profile indicator of the user equipment and
• a step of selecting the user equipment based on the profile indicator;

**6.** System to send at least one notification to at least one selected user equipment, the system comprising
• a message controller (301) and
• an identifier (302) and
• a message generator (303) and
• an access point (304)

**1.** Method to send at least one notification to at least one selected user equipment by an access point of a Wi-Fi network, the method being not depend of an active network connection and comprising
• a step (101) of obtaining the notification from a notification server
• a step (102) of sending the notification via at least one action frame, the directed action frame containing the notification.

**2.** Method according to the claim 1 wherein the at least one action frame is a directed action frame.

**3.** Method according to the claim 1 wherein the at least one action frame is a broadcasted action frame.

**4.** Method according to any of the previous claims also comprising
• an initial step (201) of selecting at least one user equipment located within a coverage range of the access point, and
• a step (202) of determining a MAC address of the selected user equipment by monitoring probe requests originating from the selected user equipment.

**5.** Method according to the claims 1 or 2 or 3 also comprising
• an initial step of receiving a probe request from at least one user equipment and the probe request containing a profile indicator of the user equipment and
• a step of selecting the user equipment based on the profile indicator;

**6.** System to send at least one notification to at least one selected user equipment, the system comprising
• a message controller (301) and
• an identifier (302) and
• a message generator (303) and
• an access point (304)
